# EUROPEAN PATENT APPLICATION

(11) **EP 4 535 494 A1**
(43) Date of publication of application: **09.04.2025**
(21) Application number: 23839879.6
(22) Date of filing: 06.07.2023
(51) Int. Cl.: H01M 10/0567, H01M 4/525, H01M 4/505, H01M 4/38, H01M 10/0569, H01M 10/052

(54) **LITHIUM SECONDARY BATTERY**

(30) Priority: 14.07.2022 KR 20220087179; 05.07.2023 KR 20230087210
(71) Applicant: LG Energy Solution, Ltd., Seoul 07335 (KR)
(72) Inventor: CHO, Yoon Gyo, Daejeon 34122 (KR); KIM, Eun Bee, Daejeon 34122 (KR); LEE, Chul Haeng, Daejeon 34122 (KR); OH, Jeong Woo, Daejeon 34122 (KR); LEE, Jung Min, Daejeon 34122 (KR)
(74) Representative: Hoffmann Eitle
(86) International application number: PCT/KR2023/009595
(87) International publication number: WO 2024/014786

(57) **Abstract**

The present invention relates to a lithium secondary battery comprising: a non-aqueous electrolyte including a lithium salt, an organic solvent, a first additive represented by chemical formula 1, and a second additive represented by chemical formula 2; a positive electrode including a positive electrode active material; a negative electrode including a negative electrode active material composed of silicon; and a separator interposed between the positive electrode and the negative electrode.

## Description

### TECHNICAL FIELD

This application claims priority from Korean Patent Application Nos. 10-2022-0087179, filed on July 14, 2022, and 10-2023-0087210, filed on July 5, 2023, in the Korean Intellectual Property Office, the disclosures of which are incorporated herein.

The present invention relates to a lithium secondary battery including an electrolyte solution containing specific additives in combination and a pure silicon (Pure Si) negative electrode material.

### BACKGROUND ART

A lithium secondary battery is generally manufactured by interposing a separator between a positive electrode including a positive electrode active material consists of a transition metal oxide containing lithium, and a negative electrode including a negative electrode active material capable of storing lithium ions to form an electrode assembly, inserting the electrode assembly into a battery case, injecting an electrolyte, which is a medium for transferring the lithium ions, into the battery case, and then sealing the battery case.

A lithium secondary battery can be made small, and has high energy density and working voltage, and thus, are applied in various fields including mobile devices, electronic products, electric vehicles, and the like. As the field of application of a lithium secondary battery becomes diverse, physical properties conditions required of the lithium secondary battery are also increasing, and particularly, there is a demand for the development of a lithium secondary battery which may be stably driven even under high-temperature conditions.

Meanwhile, when a lithium secondary battery is driven under high-temperature conditions, PF₆⁻ anions may be thermally decomposed from a lithium salt, such as LiPF₆, which is included in an electrolyte solution, so that a Lewis acid such as PF₅ may be generated, and the Lewis acid may react with moisture to generate HF. A decomposition product such as PF₅ and HF may destroy a film formed on the surface of an electrode, and may also cause a decomposition reaction of an organic solvent, and the decomposition product may react with a decomposition product of a positive electrode active material to elute transition metal ions, and the eluted transition metal ions may be electro-deposited on a negative electrode to destroy a film formed on the surface of the negative electrode.

When an electrolyte decomposition reaction continues on the destroyed film as described above, the performance of a battery is further degraded, so that there is a demand for the development of a secondary battery which may maintain excellent performance even under high-temperature conditions.

### DISCLOSURE OF THE INVENTION

### TECHNICAL PROBLEM

An object of the present invention is to improve the high-temperature performance of a lithium secondary battery including a pure silicon negative electrode active material by introducing a non-aqueous electrolyte solution containing two kinds of specific additives in combination.

### TECHNICAL SOLUTION

According to an aspect of the present invention, there is provided a lithium secondary battery comprising a non-aqueous electrolyte solution containing a lithium salt, an organic solvent, a first additive represented by Formula 1 below, and a second additive represented by Formula 2 below, a positive electrode including a positive electrode active material, a negative electrode including a negative electrode active material consists of silicon, and a separator interposed between the positive electrode and the negative electrode.

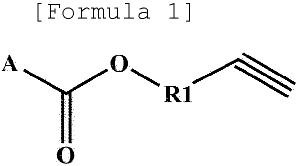

In Formula 1 above, A is a heterocyclic group having 3 to 5 carbon atoms or a heteroaryl group having 3 to 5 carbon atoms, and R1 is an alkylene group having 1 to 3 carbon atoms, and

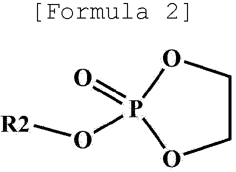

in Formula 2 above, R2 is an alkyl group having 1 to 10 carbon atoms substituted with one or more fluorines.

### ADVANTAGEOUS EFFECTS

A lithium secondary battery according to the present invention includes a non-aqueous electrolyte solution containing specific additives in combination, and thus may improve the high-temperature lifespan and gas generation amount of a lithium secondary battery including a silicon negative electrode active material.

### BEST MODE FOR CARRYING OUT THE INVENTION

Hereinafter, the present invention will be described in more detail.

In general, anions included in a lithium salt such as LiPF₆, which is widely used in an electrolyte for a lithium secondary battery, may form a decomposition product such as hydrogen fluoride (HF) and PF₅ due to thermal decomposition or moisture, and this phenomenon is intensified during driving under high-temperature conditions. The decomposition product has properties of an acid, and thus, deteriorates the surface properties of an electrode in a battery.

Transition metals in a positive electrode are easily eluted into the electrolyte solution due to a change in the structure of the positive electrode caused by the electrolyte solution decomposition product and repeated charge/discharge, and the eluted transition metal is re-deposited on the positive electrode to increase the resistance of the positive electrode.

In addition, when the eluted transition metal moves to a negative electrode via the electrolyte solution, the eluted transition metal is electro-deposited on the negative electrode, thereby destroying a solid electrolyte interphase (SEI) film and causing an additional electrolyte solution decomposition reaction, resulting in causing problems such as consumption of lithium ions and resistance increase.

Particularly, when silicon (Si) is used as a negative electrode active material, a reaction, in which the SEI film is easily damaged due to a large change in volume during a charge/discharge process and then re-generated, continuously occurs, and as a result, there is a problem in which the durability of a battery is deteriorated and gas generation is intensified.

In order to solve the problem, the present inventors have included a first additive represented by Formula 1 below and a second additive represented by Formula 2 below in a non-aqueous electrolyte solution, and have found out that, as a result, a solid SEI film is formed on a negative electrode, thereby improving the performance of a battery, especially the amount of high-temperature gas generation.

Hereinafter, each component constituting the present invention will be described in more detail.

### Non-aqueous electrolyte solution

A lithium secondary battery according to the present invention includes a non-aqueous electrolyte solution containing a lithium salt, an organic solvent, a first additive represented by Formula 1 below, and a second additive represented by Formula 2 below.

Hereinafter, each component of the non-aqueous electrolyte solution will be described in detail.

### (1) First additive and second additive

The non-aqueous electrolyte solution of the present invention includes a first additive represented by Formula 1 below.

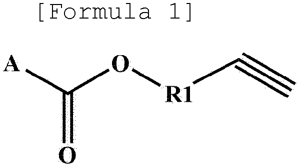

In Formula 1 above, A is a heterocyclic group having 3 to 5 carbon atoms or a heteroaryl group having 3 to 5 carbon atoms, and R1 is an alkylene group having 1 to 3 carbon atom.

Since the first additive represented by Formula 1 above includes a propargyl functional group, when the first additive is included in the electrolyte solution, the first additive is reduced and decomposed through a radical reaction, thereby forming an SEI thin film of a poly(ethylene oxide) (PEO)-based polymer component on the surface of a negative electrode. Accordingly, high-temperature durability of the negative electrode itself may be improved, and also, the electrodeposition of a transition metal on the surface of the negative electrode may be prevented. In addition, the propargyl group has the property of being adsorbed onto metal ions, and thus, may perform the function of preventing the elution of impurities by being adsorbed on the surface of metallic impurities included in a positive electrode, and the function of suppressing an internal short circuit by preventing eluted metal ions from being precipitated on the negative electrode. In addition, the first additive is combined with PF₅, a decomposition product of the electrolyte solution, thereby suppressing the production of HF, and thus, may also prevent the destruction of a cathode electrolyte interphase(CEI) film formed on the surface of the positive electrode, and suppress further decomposition of the electrolyte solution.

In an embodiment of the present invention, the A of Formula 1 above may be a nitrogen-containing heteroaryl group having 3 to 5 carbon atoms.

As a preferred example, the first additive may be represented by Formula 1-1 below.

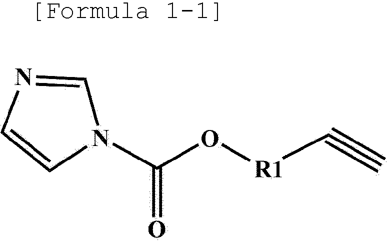

In Formula 1-1 above, R1 is the same as defined in Formula 1.

In an embodiment of the present invention, the R1 in Formula 1 above may be an alkylene group of a straight chain or branched chain having 1 to 3 carbon atoms, preferably an alkylene group of a straight chain having 1 to 3 carbon atoms, and more preferably a methylene group.

As a preferred example, the first additive may be represented by Formula 1A below.

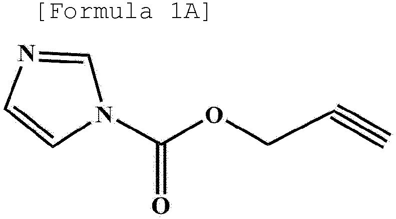

In an embodiment of the present invention, the content of the first additive may be 0.05 wt% to 10 wt%, preferably 0.1 wt% to 1 wt%, and more preferably 0.1 wt% to 0.5 wt% based on the total weight of the non-aqueous electrolyte solution. In view of the fact that when the content of the first additive is excessive, the first additive may excessively participate in the decomposition reaction at an interface between an electrode and the electrolyte solution, and film resistance may become excessively large, thereby causing a problem of increasing the resistance of the battery, it is preferable that the content of the first additive is 10 wt% or less.

In addition, the non-aqueous electrolyte solution of the present invention includes a second additive represented by Formula 2 below.

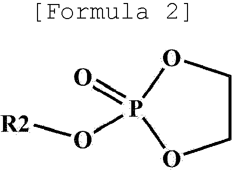

In Formula 2 above, R2 is an alkyl group having 1 to 10 carbon atoms substituted with one or more fluorines.

The second additive represented by Formula 2 above includes a cyclic phosphate structure, and thus, when included in the electrolyte solution, may form an SEI film of polyphosphoester(PPE) component on the surface of the negative electrode through a ring-opening reaction, which may impart elasticity to a silicon negative electrode. That is, since the durability against the volume change of silicon is enhanced, the negative electrode may be prevented from deteriorating in a cycle and a high-temperature environment. In addition, the second additive includes a fluoroalkyl group, and thus, may form an LiF-based inorganic SEI film on the positive electrode and the negative electrode through a reaction with lithium ions. Since the LiF has the property of being physically strong and a strong binding property with lithiated silicon (L iₓSi), there is an effect in that the deterioration of the battery due to a reaction between an electrolyte and an electrode interface is suppressed.

In an embodiment of the present invention, the R2 of Formula 2 above may be -(CR₂)ₙCF₃, the R may be hydrogen or fluorine, and the n may be an integer of 0 to 9. Preferably, the R2 of Formula 2 above may be -(CH₂)ₙCF₃, and the n may be an integer of 0 to 5, and more preferably, the n may be an integer of 1 to 3.

As a preferred example, the second additive may be represented by Formula 2A below.

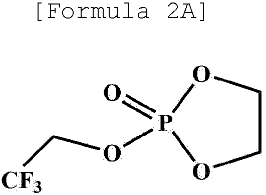

In an embodiment of the present invention, the content of the second additive may be 0.1 wt% to 15 wt% based on the total weight of the non-aqueous electrolyte solution.

Specifically, the content of the second additive may be 0.5 wt% or greater, preferably 2 wt% or greater, more preferably 5 wt% or greater, and most preferably 10 wt% or greater based on the total weight of the non-aqueous electrolyte solution. However, in view of the fact that when the second additive is excessively added, the resistance of the battery may increase due to the decomposition of the second additive, it is preferable that the content of the second additive is 15 wt% or less.

In the non-aqueous electrolyte solution according to the present invention, when the first additive and the second additive are used together, the A substituent of Formula 1, specifically an electron lone-pair present in imidazole, further promotes the ring-opening reaction of Formula 2 of the second additive, so that a reduction reaction may occur smoothly with less energy. As a result, a polymerized film component may be further increased when an SEI layer is formed on the silicon negative electrode, and the generation of HF may be suppressed by chelating PF₅. Particularly, in the case of an Si negative electrode material, due to the large volume change, the phenomenon of film damage and durability deterioration caused by HF is intensified in a high-temperature environment, so that the effect of improving durability and reducing gas generation may be more dramatic through the combination of the above additives.

In an embodiment of the present invention, the weight ratio of the second additive to the first additive, that is, the ratio (W2/W1) of the weight (W2) of the second additive to the weight (W1) of the first additive in the non-aqueous electrolyte solution may be 1.5 or greater, preferably 6 or greater, more preferably 16 or greater, and most preferably 30 or greater. As the relative ratio of the second additive increases, the formation of a polymerized film due to the ring-opening reaction of the cyclic phosphate structure is advantageous, and in addition, LiF formed by the combination of -CF₃ and lithium ions may serve to enhance the durability of the film, so that it is preferable in terms of improving the high-temperature performance of a battery using Pure Si as a negative electrode. However, in view of the fact that when a film of a polymer component is formed too thick due to the decomposition of excessive additives, battery resistance increases, and side reactions and by-products are caused during the decomposition process, it is preferable that the weight ratio of the second additive to the first additive is 40 or less.

### (2) Third additive

The non-aqueous electrolyte may include, as a third additive, any one or more compounds selected from the group consisting of a cyclic carbonate-based compound, a sultone-based compound, a sulfate-based compound, a phosphorus-based compound, a nitrile-based compound, an amine-based compound, a silane-based compound, a benzene-based compound, and a lithium salt-based compound.

The cyclic carbonate-based compound may be any one or more selected from the group consisting of vinylene carbonate(VC), vinyl ethylene carbonate(VEC), and fluoroethylene carbonate(FEC), and specifically, may be vinylene carbonate.

The sultone-based compound is a material capable of forming a stable SEI film by a reduction reaction on the surface of a negative electrode, and may be any one or more selected from the group consisting of 1,3-propane sultone(PS), 1,4-butane sultone, ethene sulfone, 1,3-propene sultone(PRS), 1,4-butene sultone, and 1-methyl-1,3-propene sultone, and specifically, may be 1,3-propane sultone(PS).

The sulfate-based compound is a material which may be electrically decomposed on the surface of a negative electrode, thereby forming a stable SEI thin film which is not cracked even during high-temperature storage, and may be any one or more selected from the group consisting of ethylene sulfate(ESA), trimethylene sulfate(TMS), and methyl trimethylene sulfate(MTMS).

The phosphorus-based compound may be a phosphate-based or phosphite-based compound, and specifically, may be any one or more selected from the group consisting of tris(trimethyl silyl)phosphate, tris(trimethyl silyl)phosphite, tris(2,2,2-trifluoroethyl) phosphate, and tris(trifluoroethyl)phosphite.

The nitrile-based compound may be any one or more selected from the group consisting of succinonitrile(SN), adiponitrile(ADN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl) ether(ASA3), 1,3,6-hexanetricarbonitrile(HTCN), 1,4-dicyano 2-butene (DCB), and 1,2,3-tris(2-cyanoethyl)propane(TCEP).

The amine-based compound may be any one or more selected from the group consisting of triethanolamine and ethylenediamine, and the silane-based compound may be tetravinylsilane.

The benzene-based compound may be any one or more selected from the group consisting of monofluorobenzene, difluorobenzene, trifluorobenzene, and tetrafluorobenzene.

The lithium salt-based compound is a compound different from the lithium salt included in the non-aqueous electrolyte solution, and may be any one or more selected from the group consisting of lithium difluoro phosphate(LiDFP; LiPO₂F₂), lithium bisoxalatoborate (LiBOB; LiB (C₂O₄)₂), lithium tetrafluoroborate(LiBF₄), lithium tetraphenylborate, and lithium difluoro(bisoxalato)phosphate(LiDFOP).

Preferably, the non-aqueous electrolyte solution according to an embodiment of the present invention may further include any one or more third additives selected from the group consisting of vinylene carbonate (VC), 1,3-propane sultone(PS), 1,3-propene sultone(PRS), and lithium difluorophosphate (LiDFP). In this case, since a more robust SEI layer may be formed on the surface of the negative electrode during an initial activation process of the secondary battery, gas generation due to the decomposition of an electrolyte at a high temperature is suppressed, and a resistance increase rate in accordance with increased cycles during the driving of the battery may be decreased.

In an embodiment of the present invention, the content of the third additive may be 0.05 wt% to 5 wt%, preferably 0.1 wt% to 3 wt%, based on the total weight of the non-aqueous electrolyte solution. It is preferable that the content of the third additive is 5 wt% or less in terms of lowering initial resistance.

### (3) Organic solvent

The non-aqueous electrolyte solution of the present invention includes an organic solvent.

As the organic solvent, various organic solvents typically used in a lithium electrolyte may be used without limitation. For example, the organic solvent may be a cyclic carbonate-based solvent, a linear carbonate-based solvent, a linear ester-based solvent, a cyclic ester-based solvent, a nitrile-based solvent, or a mixture thereof, and preferably, may include a mixture of a cyclic carbonate-based solvent and a linear carbonate-based solvent, and more preferably, may be a mixture of a fluorinated cyclic carbonate-based solvent and a linear carbonate-based solvent.

The cyclic carbonate-based solvent is a high-viscosity organic solvent having a high dielectric constant, and thus, may dissociate a lithium salt well in an electrolyte, and may be any one or more selected from the group consisting of ethylene carbonate(EC), propylene carbonate(PC), fluoro ethylene carbonate(FEC), 1,2-butylene carbonate, 2,3-butylene carbonate, 1,2-pentylene carbonate, 2,3-pentylene carbonate, and vinylene carbonate, and preferably, may include fluoro ethylene carbonate (FEC). When a fluorinated cyclic carbonate-based solvent such as FEC is used, an LiF-based inorganic SEI layer may be formed, so that there is an advantage in that a hybrid-type film may be formed together with an organic film of a polymer component formed by the additive.

In addition, the linear carbonate-based solvent is a low-viscosity, low-dielectric constant organic solvent, and may be any one or more selected from the group consisting of dimethyl carbonate(DMC), diethyl carbonate(DEC), dipropyl carbonate, ethylmethyl carbonate(EMC), methylpropyl carbonate, and ethylpropyl carbonate, and preferably, may include diethyl carbonate(DEC), ethylmethyl carbonate(EMC), or a mixture thereof, and more preferably, may include diethyl carbonate and ethylmethyl carbonate. Although the DMC is an organic solvent effective in increasing ion conductivity, thereby improving room-temperature resistance, when the DMC is used alone as the linear carbonate-based solvent, the DMC is unstable at high temperatures, so that there is a disadvantage in that gas formation due to a reduction reaction increases, and low-temperature performance is significantly reduced due to a high freezing point. Therefore, it is preferable to use DEC, EMC, or a combination thereof in terms of reducing the amount of gas generation, enhance the durability of a film formed on an electrode, and improve the low-temperature performance of the battery. Particularly, EMC has a lower viscosity than DEC, and thus, is advantageous in terms of improving ion conductivity.

The linear ester-based solvent may be any one or more selected from the group consisting of methyl acetate, ethyl acetate, propyl acetate, methyl propionate, ethyl propionate, propyl propionate, and butyl propionate, and preferably, may be methyl propionate, ethyl propionate, or propyl propionate.

The cyclic ester-based solvent may be any one or more selected from the group consisting of γ-butyrolactone, γ-valerolactone, γ-caprolactone, σ-valerolactone, and ε-caprolactone.

The nitrile-based solvent may be any one or more selected from the group consisting of succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and preferably, may be succinonitrile.

The remainder of the total weight of the non-aqueous electrolyte solution except for the contents of other components, for example, the contents of the first to third additives and the lithium salt, other than the organic solvent, may all be the organic solvent unless otherwise stated.

### (4) Lithium salt

The non-aqueous electrolyte solution of the present invention includes a lithium salt.

As the lithium salt, any lithium salt typically used in an electrolyte for a lithium secondary battery may be used without imitation, and specifically, the lithium salt may include Li⁺ as a cation, and may include any one or more selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as anions.

Specifically, the lithium salt may be any one or more selected from the group consisting of LiPF₆, LiClO₄, LiBF₄, LiN(FSO₂)₂(LiFSI), LiTFSI, lithium bis(pentafluoroethanesulfonyl)imide(LiBETI), LiSO₃CF₃, LiPO₂F₂, lithium bis(oxalate)borate(LiBOB), lithium difluoro(oxalate)borate(LiFOB), lithium difluoro(bisoxalato) phosphate(LiDFOP), lithium tetrafluoro(oxalate) phosphate(LiTFOP), and lithium fluoromalonato(difluoro) borate(LiFMDFB), and preferably, may be LiPF₆.

In an embodiment of the present invention, the concentration of lithium salt in the non-aqueous organic solution containing the lithium salt and the organic solvent, that is, the mixed solution of the lithium salt and the organic solvent, may be 0.5 M or greater, specifically 1.0 M or greater, and more specifically 1.5 M or greater. When the concentration of the lithium salt is in the above range, the effect of improving low-temperature output and improving cycle properties may be sufficiently ensured, and particularly, when the concentration of the lithium salt is as high as 1.5 M or greater, the degree of participation of anions in the lithium ion solvating shell may increase in the electrolytic solution. Accordingly, an inorganic component such as LiF is added to the negative electrode SEI layer by anions, such as PF₆⁻, in the lithium salt, so that the durability against the volume change of the silicon negative electrode may be enhanced. Meanwhile, in order to prevent an excessive increase in viscosity and surface tension so as to obtain appropriate electrolyte wettability, it is preferable that the concentration of the lithium salt is 4.0 M or less, specifically 3.0 M or less, and more specifically 2.0 M or less.

### Positive electrode

The positive electrode according to the present invention includes a positive electrode active material, and may be manufactured by coating a positive electrode slurry including the positive electrode active material, a binder, a conductive material, a solvent, and the like on a positive electrode current collector, followed by drying and roll-pressing.

The positive electrode current collector is not particularly limited as long as it has conductivity without causing a chemical change in the battery, and for example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and may be any one or more selected from the group consisting of LCO(LiCoO₂), LNO(LiNiO₂), LMO(LiMnO₂), LiMn₂O₄, LiCoPO₄, LFP(LiFePO₄), and a lithium composite transition metal oxide containing nickel (Ni), cobalt (Co), and manganese (Mn).

Meanwhile, the positive electrode active material may be a lithium composite transition metal oxide in which the molar ratio of nickel in the transition metal is 70 mol% or greater, preferably 80 mol% or greater, and more preferably 85 mol% or greater.

A high-Ni positive electrode active material, in which the nickel content in the total transition metal content is 70 mol% or greater, is structurally unstable, so that the positive electrode active material may collapse and crack at high temperatures. In the case of an active material which collapses as described above, the surface area increases, thereby increasing sites in which side reactions with an electrolyte may occur, and as a result, a large amount of gas is generated when exposed to high temperatures. When the gas is continuously generated as described above, the internal pressure of the battery is increased, thereby causing a vent to occur at an early stage, and stopping the battery from operating before the lifespan of the battery ends, so that it is important to address such side reactions and gas generation issues, which may be solved by enhancing film formation through the non-aqueous electrolyte solution including the first additive and the second additive of the present invention.

In an embodiment of the present invention, the lithium composite transition metal oxide may be a compound represented by Formula 3 below. That is, the positive electrode active material according to an embodiment of the present invention may include the lithium composite transition metal oxide represented by Formula 3 below.

[Formula 3] Li₁₊ₓ(NiₐCo_{b}Mn_{c}M_{d})O₂

In Formula 3 above, M is any one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, Mo, and

1+x, a, b, c, and d are each the atomic fraction of each independent element, wherein -0.2≤x≤0.2, 0.60≤a<1, 0<b≤0.30, 0<c≤0.30, 0≤d≤0.10, and a+b+c+d=1.

The 1+x represents the molar ratio of lithium in the lithium composite transition metal oxide, wherein the x may be -0.1≤x≤0.2, or 0≤x≤0.2. When the molar ratio of lithium satisfies the above range, the crystal structure of the lithium composite transition metal oxide may be stably formed.

The a represents the molar ratio of nickel among all metals other than lithium in the lithium composite transition metal oxide, wherein the a may be 0.70≤a<1, 0.80≤a<1, or 0.85≤a<1. When the molar ratio of nickel satisfies the above range, high energy density may be achieved to implement high capacity.

The b represents the molar ratio of cobalt among all metals other than lithium in the lithium composite transition metal oxide, wherein the b may be 0<b≤0.20, 0<b≤0.15, or 0<b≤0.10. When the molar ratio of cobalt satisfies the above range, good resistance properties and output properties may be implemented.

The c represents the molar ratio of manganese among all metals other than lithium in the lithium composite transition metal oxide, wherein the c may be 0<c≤0.20, 0<c≤0.15, or 0<c≤0.10. When the molar ratio of manganese satisfies the above range, excellent structural stability of the positive electrode active material is exhibited.

In an embodiment of the present invention, the lithium composite transition metal oxide may include any one or more doping elements selected from a group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and preferably, may include Al as a doping element. In other words, the d, which represents the molar ratio of an doping element along all metals other than lithium in the lithium composite transition metal oxide, may be 0<d≤0.10, 0<d≤0.08, or 0<d≤0.05.

Preferably, the a, b, c, d of Formula 3 above may respectively be 0.70≤a<1, 0<b≤0.20, 0<c≤0.20, and 0≤d≤0.10.

The positive electrode active material may be included in an amount of 80 wt% to 99 wt%, specifically 90 wt% to 99 wt%, based on the total weight of solids in the positive electrode slurry. At this time, when the content of the positive electrode active material is 80 wt% or less, energy density may be decreased, thereby degrading capacity.

The binder is a component for assisting in bonding of an active material and a conductive material, and in bonding to a current collector, and may be typically added in an amount of 1 wt% to 30 wt% based on the total weight of solids in a positive electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

In addition, the conductive material is a material imparting conductivity without causing a chemical change in the battery, and may be added in an amount of 0.5 wt% to 20 wt% based on the total weight of solids in the positive electrode slurry.

The conductive material may be selected, for example, among carbon black such as acetylene black, Ketjen black, channel black, furnace black, lamp black, and thermal black, graphite powder of natural graphite, artificial graphite, carbon nanotubes, and graphite, conductive fiber such as carbon fiber and metal fiber, conductive powder such as fluorocarbon powder, aluminum powder, and nickel powder, a conductive whisker such as zinc oxide and potassium titanate, a conductive metal oxide such as titanium oxide, and a conductive material such as a polyphenylene derivative.

In addition, a solvent of the positive electrode slurry may include an organic solvent such as N-methyl-2-pyrrolidone (NMP), and may be used in an amount such that a preferred viscosity is achieved when the positive electrode active material, the binder, the conductive material, and the like are included. For example, the solvent may be included in an amount such that the concentration of solids in a positive electrode slurry including a positive electrode active material, a binder, and a conductive material is 40 wt% to 90 wt%, preferably 50 wt% to 80 wt%.

### Negative electrode

The lithium secondary battery according to the present invention includes a negative electrode including a negative electrode active material, and the negative electrode may be manufactured by coating a negative electrode slurry including the negative electrode active material, a binder, a conductive material, a solvent, and the like on a negative electrode current collector, followed by drying and roll-pressing.

The negative electrode current collector typically has a thickness of 3 µm to 500 µm. The negative electrode current collector is not particularly limited as long as it has high conductivity without causing a chemical change in the battery, and for example, copper, stainless steel, aluminum, nickel, titanium, fired carbon, copper or stainless steel that is the surface-treated with one of carbon, nickel, titanium, silver, and the like, an aluminum-cadmium alloy, or the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In the present invention, the negative electrode active material consists of silicon (Si). As a negative electrode active material, silicon has a theoretical capacity that is approximately 10 times higher than that of graphite, so that it is possible to implement a high-capacity cell, and it is also possible to improve fast-charge performance of the battery by lowering the mass loading (mg·cm⁻²). However, there is a problem in that the lithium ion loss rate due to an irreversible reaction is high and the volume change is large, which may adversely affect the lifespan, and particularly, in the case of a Si 100% negative electrode, a phenomenon in which a reaction, in which an SEI film is easily damaged due to a large change in volume during a charge/discharge process and then re-generated, continuously occurs, is intensified. However, when the non-aqueous electrolyte solution according to the present invention is applied, it is possible to strength an SEI film as described above, so that the above problem may be effectively solved.

The negative electrode active material may be included in an amount of 60 wt% to 99 wt% based on the total weight of solids in the negative electrode slurry.

The binder is a component for assisting in bonding among a conductive material, an active material, and a current collector, and may be typically added in an amount of 1 wt% to 30 wt% based on the total weight of solids in the negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

The conductive material is a component for further improving the conductivity of the negative electrode active material, and may be added in an amount of 0.5 wt% to 20 wt% based on the total weight of solids in the negative electrode slurry. The conductive material is not particularly limited as long as it has conductivity without causing a chemical change in the battery, and for example, carbon black such as acetylene black, Ketjen black, channel black, furnace black, lamp black, or thermal black, graphite powder of natural graphite, artificial graphite, carbon nanotubes, or graphite, which has a very developed crystal structure, conductive fiber such as carbon fiber or metal fiber, conductive powder such as fluorocarbon powder, aluminum powder, or nickel powder, a conductive whisker such as zinc oxide and potassium titanate, a conductive metal oxide such as titanium oxide, or a conductive material such as a polyphenylene derivative, or a combination thereof.

A solvent of the negative electrode slurry may include water, or an organic solvent such as NMP, an alcohol, or the like, and may be used in an amount such that a preferred viscosity is achieved when the negative electrode active material, the binder, the conductive material, and the like are included. For example, the solvent may be included in an amount such that the concentration of solids in a slurry including a negative electrode active material, a binder and a conductive material is 20 wt% to 80 wt%, preferably 20 wt% to 40 wt%.

### Separator

The lithium secondary battery according to the present invention includes a separator between the positive electrode and the negative electrode.

The separator is to separate the negative electrode and the positive electrode and to provide a movement path for lithium ions, and any separator may be used without particular limitation as long as it is a separator typically used in a secondary battery, and particularly, a separator which has low resistance to ion movement of an electrolyte solution, has excellent electrolyte solution impregnation, and which is safe is preferable.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be used in a single-layered or multi-layered structure.

The lithium secondary battery according to the present invention as described above may be usefully used in portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-to-large devices of a power tool, an electric car including an electric vehicle (EV), a hybrid electric vehicle, and a plug-in hybrid electric vehicle (PHEV), and a system for power storage.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell used as a power source for a small-sized device, and also, may be preferably used as a unit cell in a medium-and-large-sized battery module including a plurality of battery cells.

Hereinafter, the present invention will be described in detail with reference to specific examples.

### MODE FOR CARRYING OUT THE INVENTION

### <Examples>

### Example 1.

### (Preparation of non-aqueous electrolyte solution)

A non-aqueous organic solution was prepared by mixing fluoroethylene carbonate (FEC):diethyl carbonate (DEC):ethylmethyl carbonate (EMC) at a volume ratio of 10:45:45, and then dissolving LiPF₆ to 1.5 M in the mixture. 100 wt% of a non-aqueous electrolyte solution was prepared by mixing 0.3 wt% of the compound represented by Formula 1A, 0.5 wt% of the compound represented by Formula 2A, and the remainder of the non-aqueous organic solution.

### (Manufacturing of lithium secondary battery)

A positive electrode slurry (solid content 75.5 wt%) was prepared by adding Li(Ni_{0.85}Co_{0.05}Mn_{0.08}Al_{0.02})O₂ as a positive electrode active material, carbon black as a conductive material, and polyvinylidene fluoride as a binder at a weight ratio of 97.74:0.7:1.56 to N-methyl-2-pyrrolidone (NMP) as a solvent. The positive electrode slurry was coated on a positive electrode current collector (Al thin film) having a thickness of 15 µm, dried and then roll-pressed to manufacture a positive electrode.

A negative electrode active material slurry having a solid content of 26.0 wt% was prepared by mixing Si particles having an average particle diameter of 5 µm (Wacker Corporation) as a negative electrode active material, styrene-butadiene rubber-carboxymethylcellulose(SBR-CMC) as a binder, and carbon black as a conductive material at a weight ratio of 70:9.7:20.3 in distilled water as a solvent. The negative electrode active material slurry was coated on a negative electrode current collector (Cu thin film) having a thickness of 15 µm, dried and then roll-pressed to manufacture a negative electrode.

An electrode assembly was manufactured by sequentially stacking the positive electrode, a polyolefin-based porous separator coated with inorganic particles (Al₂O₃), and the negative electrode.

A lithium secondary battery was manufactured by accommodating the assembled electrode assembly in a pouch-type battery case, and then injecting the prepared non-aqueous electrolyte solution thereto.

### Example 2.

A lithium secondary battery was manufactured in the same manner as in Example 1 except that the content of the compound represented by Formula 2A was changed to 2 wt% when preparing a non-aqueous electrolyte solution.

### Example 3.

A lithium secondary battery was manufactured in the same manner as in Example 1 except that the content of the compound represented by Formula 2A was changed to 5 wt% when preparing a non-aqueous electrolyte solution.

### Example 4.

A lithium secondary battery was manufactured in the same manner as in Example 1 except that the content of the compound represented by Formula 2A was changed to 10 wt% when preparing a non-aqueous electrolyte solution.

### Example 5.

A lithium secondary battery was manufactured in the same manner as in Example 1 except that the content of the compound represented by Formula 1A was changed to 10 wt% when preparing a non-aqueous electrolyte solution.

### Example 6.

A lithium secondary battery was manufactured in the same manner as in Example 1 except that 2.5 wt% of vinylene carbonate (VC) was further added when preparing a non-aqueous electrolyte solution.

### Comparative Example 1.

A lithium secondary battery was manufactured in the same manner as in Example 1 except that the compound represented by Formula 1A and the compound represented by Formula 2A were not added when preparing a non-aqueous electrolyte solution.

### Comparative Example 2.

A lithium secondary battery was manufactured in the same manner as in Example 1 except that the compound represented by Formula 2A was not added when preparing a non-aqueous electrolyte solution.

### Comparative Example 3.

A lithium secondary battery was manufactured in the same manner as in Example 1 except that the compound represented by Formula 1A was not added when preparing a non-aqueous electrolyte solution.

### Comparative Example 4.

A lithium secondary battery was manufactured in the same manner as in Example 1 except that a compound represented by Formula Z1 below(5-Ethynyl-1-methyl-1H-imidazole) was used instead of the compound represented by Formula 1A when preparing a non-aqueous electrolyte solution.

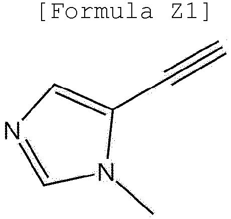

### Comparative Example 5.

A lithium secondary battery was manufactured in the same manner as in Example 1 except that a compound represented by Formula Z2 below (2-Ethoxy-1,3,2-dioxaphospholane 2-Oxide) was used instead of the compound represented by Formula 2A when preparing a non-aqueous electrolyte solution.

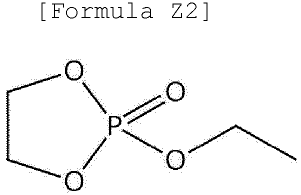

### Comparative Example 6-1.

A lithium secondary battery was manufactured in the same manner as in Example 1 except that instead of the slurry described in Example 1, a negative electrode active material slurry prepared by mixing a mixture of SiO and artificial graphite blended at a weight ratio of 2:8 as a negative electrode active material, styrene-butadiene rubber-carboxymethylcellulose (SBR-CMC) as a binder, carbon black as a conductive material, and sodium carboxymethylcellulose (CMC) as a thickener at a weight ratio of 96.0:2.3:0.7:1 in distilled water as a solvent was used.

### Comparative Example 6-2.

A lithium secondary battery was manufactured in the same manner as in Comparative Examples 6-1 except that the compound represented by Formula 2A was not added when preparing a non-aqueous electrolyte solution.

### Comparative Example 6-3.

A lithium secondary battery was manufactured in the same manner as in Comparative Examples 6-1 except that the compound represented by Formula 1A was not added when preparing a non-aqueous electrolyte solution.

### <Experimental Examples>

Experimental Example 1: Evaluation of gas generation amount after high-temperature (45C) cycle

The lithium secondary battery manufactured in each of Examples 1 to 6, and Comparative Examples 1 to 5 and 6-1 to 6-3 was subjected to a formation process, and then subjected to constant current/constant voltage (CC/CV) charge (0.05 C cut off) to 4.2 V at a rate of 1 C at 45°C, and subjected to constant current (CC) discharge to 3.0 V at a rate of 0.5 C.

In addition, after 200 cycles, the charged battery was transferred to a charger/discharger at room temperature (25°C), and then gases collected in the pouch were analyzed using a gas chromatography-thermal conductivity detector (GC-TCD), and the relative gas generation amount of each battery was calculated by setting the gas generation amount measured in Comparative Example 1 to 100%, and shown in Table 1 below.

### Experimental Example 2: Evaluation of gas generation amount after high-temperature(60°C) storage

The lithium secondary battery manufactured in each of Examples 1 to 6, and Comparative Examples 1 to 5 and 6-1 to 6-3 was subjected to a formation process, and then subjected to charge (0.05 C cut off) to 4.2 V at a rate of 0.33 C at 25°C under a constant current/constant voltage condition to fully charge the battery to SOC 100%. The fully charged battery was stored at 60°C for 8 weeks, and then transferred to a charger/discharger at room temperature (25°C), and gases collected in the pouch were analyzed using a gas chromatography-thermal conductivity detector (GC-TCD), and the relative gas generation amount of each battery was calculated by setting the gas generation amount measured in Comparative Example 1 to 100%, and shown in Table 1 below.

**[Table 1]**

| | Negat ive elect rode activ e mater ial | First additive | | Second additiv e | | Third additiv e | | Exper iment al Examp le 1 | Exper iment al Examp le 2 |
|---|---|---|---|---|---|---|---|---|---|
| | | Che mic al For mul a | Con ten t (wt %) | Ch em ic al Fo rm ul a | Con ten t (wt %) | Ch em ic al Fo rm ul a | Con ten t (wt %) | Gas gener ation amoun t (%) | Gas gener ation amoun t (%) |
| Example 1 | Pure Si | 1A | 0.3 | 2A | 0.5 | - | - | 80.4 | 85.4 |
| Example 2 | Pure Si | 1A | 0.3 | 2A | 2 | - | - | 74.5 | 79.2 |
| Example 3 | Pure Si | 1A | 0.3 | 2A | 5 | - | - | 41.9 | 48.5 |
| Example 4 | Pure Si | 1A | 0.3 | 2A | 10 | - | - | 33.5 | 39.4 |
| Example 5 | Pure Si | 1A | 10 | 2A | 0.3 | - | - | 70.8 | 73.5 |
| Example 6 | Pure Si | 1A | 0.3 | 2A | 0.5 | VC | 2.5 | 87.8 | 89.0 |
| Comparative Example 1 | Pure Si | - | - | - | - | - | - | 100 | 100 |
| Comparative Example 2 | Pure Si | 1A | 0.3 | - | - | - | - | 98.7 | 95.7 |
| Comparative Example 3 | Pure Si | - | - | 2A | 0.5 | - | - | 97.4 | 92.5 |
| Comparative Example 4 | Pure Si | Z1 | 0.3 | 2A | 0.5 | - | - | 99.5 | 98.9 |
| Comparative Example 5 | Pure Si | 1A | 0.3 | Z2 | 0.5 | - | - | 112.1 | 105.8 |
| Comparative Example 6-1 | SiO+C | 1A | 0.3 | 2A | 0.5 | - | - | 95.7 | 93.8 |
| Comparative Example 6-2 | SiO+C | 1A | 0.3 | - | - | - | - | 99.8 | 98.3 |
| Comparative Example 6-3 | SiO+C | - | - | 2A | 0.5 | - | - | 99.2 | 97.1 |

Through the results of Table 1 above, it can be confirmed that when the first additive and the second additive are both included as an electrolyte solution additive, it is effective in reducing the amount of gas generation after the high-temperature cycle and high-temperature storage of a lithium secondary battery using 100 wt% of Si as a negative electrode active material.

Specifically, in a case in which the first additive or the second additive is used alone (Comparative Examples 2 to 3), it can be confirmed that the effect of reducing the amount of gas generation is insignificant compared to a case in which either the first additive or the second additive is not included (Comparative Example 1). In addition, although the compound of Formula Z1 used in Comparative Example 4 is a propargyl-substituted imidazole compound, when used instead of the first additive of the present application, it can be confirmed that the effect of reducing the amount of gas generation is significantly reduced. Moreover, although the compound of Formula Z2 used in Comparative Example 5 is a cyclic phosphate compound like the second additive of the present application, a methyl group, not a fluoroalkyl group, is positioned at a terminal (R2 of Formula 2), so that it can be confirmed that an increase in film resistance is rather intensified, thereby further increasing the amount of gas generation compared to Comparative Example 1 in which no additives were used. This is a phenomenon that occurs because although fluoroalkyl contributes to the inclusion of components having excellent durability and ion conductivity such as LiF in the SEI layer, the methyl group produces only the polyolefin component with no conductivity and poor durability. That is, a portion of the SEI layer cannot withstand the volume expansion of the Si negative electrode and is lost, and in the lost portion, another film is continuously generated due to an electrolyte side reaction during a cycle, so that the increase in film resistance is intensified.

Meanwhile, in the case of Comparative Example 6-1 in which the mixture of SiO and graphite was used instead of Si as the negative electrode active material, the amount of gas generation was greater than that of Example 1, and also, compared to Comparative Examples 6-2 and 6-3 in which the first additive and the second additive were used alone, respectively, it can be confirmed that the effect of reducing the amount of gas generation was insignificant. Through Comparative Examples 6-1 to 6-3, it can be seen that the combination of the first additive and the second additive of the present invention has a particularly significant effect in improving the amount of high-temperature gas generation in a battery including a Pure Si negative electrode active material.

In addition, among Examples 1 to 6, it can be confirmed that the effect of reducing the amount of gas generation was most excellent in Examples 3 and 4 in which the weight ratio (W2/W1) of the second additive to the first additive was 15 or greater.

### Experimental Example 3: Evaluation of capacity retention rate after high-temperature(45°C) cycle

The lithium secondary battery manufactured in each of Examples 1 to 6, and Comparative Examples 1 to 5 was subjected to a formation process, and then subjected to constant current/constant voltage (CC/CV) charge (0.05 C cut off) to 4.2 V at a rate of 1 C at 45°C, and subjected to constant current (CC) discharge to 3.0 V at a rate of 0.5 C.

Performing the above charge/discharge once each was set to 1 cycle, and the same charge/discharge was repeated 200 times. The retention rate of the capacity after 200 cycles with respect to the initial discharge capacity after 1 cycle was calculated, and the results are shown in Table 2 below.

**[Table 2]**

| | Nega tive elec trod e acti ve mate rial | First additive | | Second additive | | Third additive | | Experim ental Example 3 |
|---|---|---|---|---|---|---|---|---|
| | | Chem ical Form ula | Con ten t (wt %) | Chem ical Form ula | Con ten t (wt %) | Chem ical Form ula | Cont ent (wt% ) | Capacit y retenti on rate (%) |
| Example 1 | Pure Si | 1A | 0.3 | 2A | 0.5 | - | - | 84.5 |
| Example 2 | Pure Si | 1A | 0.3 | 2A | 2 | - | - | 86.8 |
| Example 3 | Pure Si | 1A | 0.3 | 2A | 5 | - | - | 89.2 |
| Example 4 | Pure Si | 1A | 0.3 | 2A | 10 | - | - | 93.5 |
| Example 5 | Pure Si | 1A | 10 | 2A | 0.3 | - | - | 87.5 |
| Example 6 | Pure Si | 1A | 0.3 | 2A | 0.5 | VC | 2.5 | 85.8 |
| Comparative Example 1 | Pure Si | - | - | - | - | - | - | 75.2 |
| Comparative Example 2 | Pure Si | 1A | 0.3 | - | - | - | - | 77.6 |
| Comparative Example 3 | Pure Si | - | - | 2A | 0.5 | - | - | 79.4 |
| Comparative Example 4 | Pure Si | Z1 | 0.3 | 2A | 0.5 | - | - | 65.8 |
| Comparative Example 5 | Pure Si | 1A | 0.3 | Z2 | 0.5 | - | - | 60.1 |

Through the results of Table 2 above, it can be confirmed that when the first additive and the second additive of the present application are both included as an electrolyte solution additive, it is effective in improving the high-temperature lifespan of a lithium secondary battery using 100 wt% of Si as a negative electrode active material.

Specifically, it can be confirmed that the capacity retention rate was significantly improved not only compared to a case where both the first additive and the second additive were not included (Comparative Example 1), but also compared to a case where either the first additive or the second additive was used alone (Comparative Examples 2 and 3). In addition, although the compound represented by Formula Z1 used in Comparative Example 4 and the compound of Formula Z2 used in Comparative Example 5 have a structure similar to that of the first additive and the second additive of the present invention, respectively, it can be confirmed that the compounds rather worsens the lifespan properties.

In addition, among Examples 1 to 6, it can be confirmed that the effect of improving the capacity retention rate was most excellent in Examples 3 and 4 in which the weight ratio (W2/W1) of the second additive to the first additive was 15 or greater.

### Experimental Example 4: Evaluation of fast-charge performance

The lithium secondary battery manufactured in each of Examples 1 to 6, and Comparative Examples 1 to 5 and 6-1 to 6-3 was subjected to a formation process, and then subjected to constant current/constant voltage (CC/CV) charge (0.05 C cut off) to 4.2 V at a rate of 1 C at 25°C, and subjected to constant current (CC) discharge to 3.0 V at a rate of 0.5 C to measure the initial discharge capacity, initial resistance, and initial volume of the battery. At this time, the volume was measured by a buoyancy method.

Next, the lithium secondary battery was set to a State Of Charge (SOC) of 15%, and then subjected to charge at 25°C while changing the C-rate according to the SOC state as shown in Table 3 below, and the voltage profile was measured by checking a voltage value at intervals of 1 second for each charging section.

**[Table 3]**

| | Charge time (sec) | C-rate (C) |
|---|---|---|
| SOC 15% to 95% | 720 | 4.0 |

Thereafter, termination conditions were set using the voltage value for each section obtained in each section, and the charge amount at the time of charge in the CC mode was recorded. Then, discharge was performed again in the CC mode with 0.33 C to an SOC of 15%.

Performing the above charge and discharge was set to 1 cycle, and 100 cycles were performed, and then, the capacity retention rate, resistance increase rate, and volume increase rate were calculated according to Equations 1 to 3 below and are shown in Table 4 below. Capacity retention rate (%) = (Discharge capacity after 100 cycles/Initial discharge capacity) × 100 [Equation 2] Resistance increase rate (%) = {(Resistance after 100 cycles-Initial resistance)/Initial resistance} × 100 Volume increase rate (%) = {(Volume after 100 cycles-Initial volume)/Initial volume} × 100

**[Table 4]**

| | Nega tive elec trod e acti ve mate rial | First additiv e | | Second additiv e | | Third additi ve | | Experimental Example 4 | | |
|---|---|---|---|---|---|---|---|---|---|---|
| | | Ch em ic al Fo rm ul a | Con ten t (wt %) | Ch em ic al Fo rm ul a | Con ten t (wt %) | Ch em ic al Fo rm ul a | Co nt en t (w t % ) | Capa city rete ntio n rate (%) | Resi stan ce incr ease rate (%) | Volu me incr ease rate (%) |
| Example 1 | Pure Si | 1A | 0.3 | 2A | 0.5 | - | - | 72.6 | 49.5 | 45.1 |
| Example 2 | Pure Si | 1A | 0.3 | 2A | 2 | - | - | 74.8 | 47.7 | 42.4 |
| Example 3 | Pure Si | 1A | 0.3 | 2A | 5 | - | - | 84.9 | 40.3 | 37.9 |
| Example 4 | Pure Si | 1A | 0.3 | 2A | 10 | - | - | 86.4 | 38.5 | 35.6 |
| Example 5 | Pure Si | 1A | 10 | 2A | 0.3 | - | - | 76.1 | 45.8 | 40.1 |
| Example 6 | Pure Si | 1A | 0.3 | 2A | 0.5 | VC | 2.5 | 68.3 | 62.3 | 55.6 |
| Comparative Example 1 | Pure Si | - | - | - | - | - | - | 45.8 | 81.2 | 75.6 |
| Comparative Example 2 | Pure Si | 1A | 0.3 | - | - | - | - | 53.4 | 69.1 | 64.8 |
| Comparative Example 3 | Pure Si | - | - | 2A | 0.5 | - | - | 56.3 | 66.9 | 61.0 |
| Comparative Example 4 | Pure Si | Z1 | 0.3 | 2A | 0.5 | - | - | 47.7 | 74.0 | 68.7 |
| Comparative Example 5 | Pure Si | 1A | 0.3 | Z2 | 0.5 | - | - | 42.6 | 83.6 | 78.2 |
| Comparative Example 6-1 | SiO+ C | 1A | 0.3 | 2A | 0.5 | - | - | 60.2 | 64.3 | 58.3 |
| Comparative Example 6-2 | SiO+ C | 1A | 0.3 | - | - | - | - | 46.5 | 76.8 | 71.3 |
| Comparative Example 6-3 | SiO+ C | - | - | 2A | 0.5 | - | - | 49.1 | 72.1 | 66.3 |

Through the results of Table 4 above, it can be confirmed that when the first additive and the second additive of the present application are both included as an electrolyte solution additive, it is effective in improving the performance after fast-charging a lithium secondary battery using 100 wt% of Si as a negative electrode active material.

Specifically, it can be confirmed that the battery according to the present invention shows significantly improved results in terms of capacity, resistance, and volume after the fast-charge compared to not only when both the first additive and the second additive were not included (Comparative Example 1), but also when either the first additive or the second additive was used alone (Comparative Examples 2 and 3). In addition, it can be confirmed that the compound of Formula Z1 used in Comparative Example 4 had an insignificant effect in improving fast-charge performance compared to the first additive of the present invention, and the compound of Formula Z2 used in Comparative Example 5 rather worsened fast-charge performance. In addition, it can be confirmed that compared to Example 1, Comparative Example 6-1 in which the mixture of SiO and graphite was used instead of Si as the negative electrode active material also had a low capacity retention rate, and a high resistance increase rate and a high volume increase rate after the fast-charge.

Meanwhile, among Examples 1 to 6, it can be confirmed that the performance after the fast-charge was most excellent in Examples 3 and 4, in which the weight ratio (W2/W1) of the second additive to the first additive was 15 or greater.

## Claims

1. A lithium secondary battery comprising:
a non-aqueous electrolyte solution containing a lithium salt, an organic solvent, a first additive represented by Formula 1 below, and a second additive represented by Formula 2 below;
a positive electrode including a positive electrode active material;
a negative electrode including a negative electrode active material consists of silicon; and
a separator interposed between the positive electrode and the negative electrode: 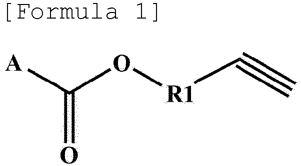
in Formula 1,
A is a heterocyclic group having 3 to 5 carbon atoms or a heteroaryl group having 3 to 5 carbon atoms, and
R1 is an alkylene group having 1 to 3 carbon atoms, 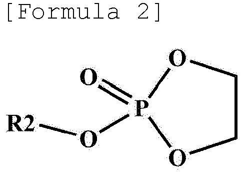
in Formula 2,
R2 is an alkyl group having 1 to 10 carbon atoms substituted with one or more fluorines.

2. The lithium secondary battery of claim 1, wherein the A in Formula 1 above is a nitrogen-containing heteroaryl group having 3 to 5 carbon atoms.

3. The lithium secondary battery of claim 1, wherein:
the R2 in Formula 2 is - (CR₂)ₙCF₃;
the R is hydrogen or fluorine; and
the n is an integer of 0 to 9.

4. The lithium secondary battery of claim 1, wherein a content of the first additive is 0.05 wt% to 10 wt% based on a total weight of the non-aqueous electrolyte solution.

5. The lithium secondary battery of claim 1, wherein a content of the second additive is 0.1 wt% to 15 wt% based on a total weight of the non-aqueous electrolyte solution.

6. The lithium secondary battery of claim 1, wherein a weight ratio of the second additive to the first additive is 1.5 or greater.

7. The lithium secondary battery of claim 1, wherein a weight ratio of the second additive to the first additive is 6 or g reater.

8. The lithium secondary battery of claim 1, wherein the non-aqueous electrolyte solution further comprises one or more third additives selected from the group consisting of vinylene carbonate, 1,3-propane sultone, 1,3-propene sultone, and lithium difluorophosphate.

9. The lithium secondary battery of claim 1, wherein the organic solvent comprises a mixture of a fluorinated cyclic carbonate-based solvent and a linear carbonate-based solvent.

10. The lithium secondary battery of claim 9, wherein the linear carbonate-based solvent comprises diethyl carbonate, ethyl methyl carbonate, or a mixture thereof.

11. The lithium secondary battery of claim 1, wherein a concentration of lithium salt in a mixed solution of the lithium salt and the organic solvent is 1.5 M or greater.

12. The lithium secondary battery of claim 1, wherein the positive electrode active material comprises a lithium composite transition metal oxide represented by Formula 3:
[Formula 3] Li₁₊ₓ(NiₐCo_{b}Mn_{c}M_{d})O₂
in Formula 3,
M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, Mo, and
1+x, a, b, c, and d are each the atomic fraction of each independent element, wherein -0.2≤x≤0.2, 0.60≤a<1, 0<b≤0.30, 0<c≤0.30, 0≤d≤0.10, and a+b+c+d=1.

13. The lithium secondary battery of claim 1, wherein the positive electrode active material comprises a lithium composite transition metal oxide in which the molar ratio of nickel in the transition metal is 70 mol% or greater.
